# EUROPÄISCHE PATENTSCHRIFT

(11) **EP 1 748 237 B1**
(45) Veröffentlichungstag und Bekanntmachung des Hinweises auf die Patenterteilung: **02.01.2008**
(21) Anmeldenummer: 05015968.0
(22) Anmeldetag: 22.07.2005
(51) Int. Cl.: F16K 17/38

(54) **Sicherheitsventil für einen Druckgasbehälter**
Safety valve for a pressure gas container
Soupape de sûreté pour une réservoir de gaz sous pression

(43) Veröffentlichungstag der Anmeldung: 31.01.2007
(73) Patentinhaber: Job Lizenz GmbH & Co. KG, 22926 Ahrensburg (DE)
(72) Erfinder: Job, Eduard J., 22926 Ahrensburg (DE)
(74) Vertreter: von Eichel-Streiber, Caspar

(56) Entgegenhaltungen:
- EP-A- 0 960 634
- DE-A1- 19 911 530
- US-A- 4 167 974

## Beschreibung

Die Erfindung betrifft ein Sicherheitsventil für einen Druckgasbehälter gemäß dem Oberbegriff des Anspruches 1.

Ein solches Sicherheitsventil ist in der EP 0 960 634 A2, dort in dem Ausführungsbeispiel gemäß der Figur 4, offenbart. Ein weiteres abweichend von dem Oberbegriff des Anspruchs 1 gebildetes Sicherheitsventil ist in der Patentschrift DE 199 11 530 C2 offenbart.

Nach den technischen Regeln für Druckgase, z.B. TTRG381, müssen Druckgasbehälter mit einer Schmelzsicherung oder einer gleichwirkenden Sicherung ausgerüstet sein, um im Brandfall Drucküberschreitungen und damit ein Bersten des Behälters sicher zu verhindern.

Dies gilt beispielsweise auch für in Kraftfahrzeugen angeordnete Druckgasbehälter zur Aufnahme von z.B. Erdgas, Wasserstoff oder anderen brennbaren Gasen als Treibstoff.

Die aus der oben genannten DE 199 11 530 C2 vorbekannte Variante eines solchen Sicherheitsventils enthält einen Verschlusskörper, der sich in einer Bereitschaftsposition direkt auf dem Metall eines Gehäuses abstützt, in welchem ein Überströmkanal gebildet ist. Unmittelbar auf dem Verschlusskörper selbst stützt sich dann wiederum der Berstkörper ab, der in diesem Beispiel eine Glasampulle ist. Nach der in der oben genannten Druckschrift offenbarten Lehre ist die Glasampulle letztlich zwischen zwei starr verbundene Auflagen eingespannt. Die Unterschiede zwischen den thermischen Ausdehnungskoeffizienten des Metalls, aus dem der Verschlusskörper sowie das Gehäuse gebildet sind, und des Glasmaterials des Berstkörpers führen bei dieser Anordnung dazu, dass bei Abkühlung bzw. Erwärmung die Gefahr besteht, dass der Berstkörper zerbricht, weil beispielsweise sich das Metall des Verschlusskörpers und des Gehäuses stärker ausdehnt bzw. zusammenzieht als das Glasmaterial des Berstkörpers und diesen somit, insbesondere bei Abkühlung zerdrückt. Das Problem unterschiedlicher Temperaturen und damit unterschiedlicher Ausdehnungen der genannten Materialien tritt insbesondere bei in Kraftfahrzeugen angeordneten Druckgasbehältern bzw. den daran angeordneten Sicherheitsventilen auf. Kraftfahrzeuge sind, insbesondere wenn sie im freien geparkt oder abgestellt werden, Temperaturen von bis zu -50°C im Winter bis hin zu 50°C und mehr (sofern sie in der prallen Sonne stehen) im Sommer ausgesetzt, wobei beim Füllvorgang des Druckbehälters die genannten Umgebungstemperaturen sogar noch weit unterschritten werden können. Aufgrund dieser weiten Temperaturspanne von 100°C und mehr machen sich die unterschiedlichen thermischen Ausdehnungskoeffizienten von Metall und Glas deutlich bemerkbar. Es kann mit anderen Worten zu einem unbeabsichtigten Auslösen des Sicherheitsventils und einem Ausströmen des in dem Druckgasbehälter befindlichen Gases kommen. Gleiche Überlegungen hinsichtlich der thermischen Ausdehnungskoeffizienten gelten aber auch für andere Druckgasbehälter bzw. für die darin angeordneten Sicherheitsventile, die hohen Temperaturschwankungen ausgesetzt sind.

In der DE 199 11 530 C2 ist in Fig. 4 eine weitere Variante eines Sicherheitsventils dargestellt, die in ihren Merkmalen von dem Oberbegriff des Anspruches 1 abweicht. Hier bildet eine Folie den Verschluss für den Überströmkanal, welche Folie bei Bersten des Berstkörpers von einem unter Federspannung stehenden Stößel durchstochen und somit der Überströmkanal mit dem Auslasskanal verbunden wird. Problematisch bei dieser Lösung ist, dass die Folie beispielsweise beim Montieren des Sicherheitsventils verletzt werden und damit durchlässig werden kann, so dass es zu einem unbeabsichtigten Ausströmen des Inhaltes des Druckbehälters über das Sicherheitsventil kommen kann, ohne dass der Berstkörper aufgrund hoher Temperaturen geborsten ist und das Sicherheitsventil ausgelöst hat. Ferner sind in den Druckgasbehältern, für die die Sicherheitsventile eingesetzt werden sollen, häufig Gase unter hohen Drücken (häufig mehrere hundert bar) gespeichert, so dass eine einfache Folie diesen Drücken oftmals nicht ohne weiteres sicher standhalten kann.

In der eingangs genannten EP 0 960 634 A2 ist den Nachteilen, die die Sicherheitsventile gemäß der DE 199 11 530 C2 abgeholfen. Allerdings ist hier eine ein Auslösen des Sicherheitsventils möglicherweise verzögernde Berstscheibe vonnöten.

Aufgabe der vorliegenden Erfindung ist es daher, ein Sicherheitsventil für Druckgasbehälter der eingangs genannten Art dahingehend weiterzubilden, dass es ohne das Erfordernis einer Berstscheibe als zusätzliches sicherheitsrelevantes Teil die Vorteile der in der EP 0 960 634 A2 geschilderten Abpufferung unterschiedlicher thermischer Ausdehnungen nutzen kann.

Diese Aufgabe wird gelöst durch ein Sicherheitsventil mit den Merkmalen des Patentanspruchs 1.

Vorteilhafte Weiterbildungen der Erfindung sind in den abhängigen Ansprüchen 2 bis 7 angegeben.

Das erfindungsgemäße Sicherheitsventil zeichnet sich dadurch aus, dass es wie bei einigen der in der DE 199 11 530 C2 gezeigten Varianten neben einem Verschlusskörper ein Dichtelement enthält, mit welchem der Verschlusskörper zum Abdichten des Überströmkanals zusammenwirkt. Anders als beispielsweise bei Sprinkleranlagen, bei denen in der Regel eine unter Druck stehende Leitung ohne ein weiteres Dichtelement direkt durch einen von einem Berstkörper in Position gehaltenen Schließkörper verschlossen ist, ist dies bei mit hohen Drücken befüllten Druckgasbehältern nicht möglich. Die Drücke in Wasserleitungen von Sprinkleranlagen liegen üblicherweise bei maximal 12 bar; in den mit den erfindungsgemäßen Sicherheitsventil auszurüstenden Druckgasbehältern werden Gase mit Drücken von mehreren hundert bar, beispielsweise 300 bar, gelagert. Bei diesen Drücken ist ein zuverlässiges Abdichten der Überströmleitung unter Zuhilfenahme eines Dichtelementes in Form eines O-Ringes, möglich. Diese konstruktive Variante ist auch bei einer der in der genannten DE 199 11 530 C2 offenbarten Ausführungsformen eines vorbekannten Sicherheitsventils beschrieben.

O-Ringe sind als handelsübliche Teile einfach und kostengünstig zu beschaffen und bieten eine gute Abdichtung gegen die jeweiligen Dichtflächen. Dabei sollte das Material des O-Rings so gewählt werden, dass es für die entsprechenden Temperaturbereiche geeignet ist und nicht etwa zum Kleben an den Dichtflächen neigt, was zu einer verzögerten, schlimmstenfalls einer verhinderten Auslösung des Sicherheitsventils führen könnte, wenn der O-Ring den mit ihm zusammenwirkenden Verschlusskörper dichtend an den Dichtflächen hält, auch wenn der Berstkörper geborsten ist

Zusätzlich zu den aus der DE 199 11 530 C2 bekannten Merkmalen enthält das erfindungsgemäße Sicherheitsventil, ähnlich wie in Fig. 4 der EP 0 960 634 A2 gezeigt, ein Federelement, welches auf den Berstkörper eines in Richtung des Widerlagers gerichtete Federkraft ausübt. Dieses Federelement dient konkret dazu, durch unterschiedliche thermische Ausdehnungskoeffizienten des Gehäuses des Sicherheitsventils bzw. des Schließkörpers bzw. des Widerlagers und des Berstkörpers auftretende Spannungen bzw. Kräfte abzufangen und somit zu verhindern, dass der Berstkörper vor Erreichen einer Auslösetemperatur versehentlich zerbricht und damit das Sicherheitsventil ungewollt auslöst.

Grundsätzlich wäre es zur Kompensation aufgrund unterschiedlicher thermischer Ausdehnungskoeffizienten auftretender auf den Berstkörper einwirkender Lasten auch möglich, ein Federelement vorzusehen, welches den Berstkörper in entgegengesetzter Richtung vorspannt. Allerdings hätte eine solche Lösung den entscheidenden Nachteil, dass das Federelement, welches das Berstelement in Richtung des den Auslasskanal verschließenden Schließkörpers vorspannt einem maximal zu erwartenden Druck entgegenwirken muss. Mit anderen Worten müsste das Federelement eine solche Kraft auf den Berstkörper aufbringen, die bspw. einem Maximaldruck von 300 bar und sogar Prüfdrücken von bis zu 1000 bar und mehr widerstehen kann. Der Berstkörper wäre so für die gesamte Lebensdauer des Sicherheitsventils einer hohen Kraft ausgesetzt, welche über längere Zeiträume den Berstkörper verändern kann. So neigt insbesondere ein Berstkörper aus Glas (z.B. eine Glasampulle) unter solch hoher ständiger Dauerlast zum "Fließen", d.h. das Glas verändert seine Form. Dadurch kann es letztlich zu Undichtigkeiten und Fehlfunktionen des Sicherheitsventils kommen mit allen auch sicherheitsrelevanten Folgen.

Die gewählte Richtung der Federkraft erlaubt hingegen eine lediglich vergleichsweise geringe Vorspannung des Berstkörpers, da die Federkraft in dieselbe Richtung wirkt wie die Kraft aufgrund des Druckes in dem Druckbehälter. Im Normalfall liegen hier dann an dem Berstkörper lediglich Drucklasten von einem Bruchteil der Maximallast an, was zu einer deutlichen Erhöhung der Lebensdauer des Berstkörpers und damit des Sicherheitsventils führt.

Der wie im Anspruch 1 angegeben geformte Verschlusskörper eignet sich schließlich besonders gut, eine genügend hohe Anpresskraft auf den O-Ring aufzubringen und damit eine zuverlässige Abdichtung des Überströmkanals in der Bereitschaftsposition zu erreichen und macht so die in der EP 0 960 634 A2 vorgesehene Berstscheibe überflüssig.

Dabei lässt sich eine besonders gute Abdichtung erzielen, wenn die Dichtfläche des Dichtelementes konkav gewölbt ist (Anspruch 2), dies insbesondere dann, wenn die konkav gewölbte Dichtfläche in wenigstens einem Abschnitt derselben mit ihrer Krümmung der Krümmung einer Abdichtfläche des O-Rings entspricht (Anspruch 3).

Die in dem Anspruch 4 angegebene Variante dieser bevorzugten Ausführungsform bietet durch insgesamt zwei im Überströmkanal angeordnete Tellerfedern eine besonders gute Abfederung von Längenveränderungen aufgrund unterschiedlicher thermischer Ausdehnungen und damit ein Sicherheitsventil, welches für Temperaturen unterhalb der Auslösetemperatur besonders stabil ist.

In einer bevorzugten Variante der Erfindung ist das Federelement eine auf einem Absatz in dem Überströmkanal aufgelegte Feder, insbesondere eine solche Tellerfeder. Diese wirkt dann auf ein dem Widerlager gegenüberliegendes Ende des Berstkörpers, um diesen in Richtung des Widerlagers mit einer Federkraft zu beaufschlagen. Eine Tellerfeder ist ein kleines, effektives Bauelement, welches das sichere Auslösen des Sicherheitsventils nicht behindert.

Als Berstkörper wird eine zwischen dem Verschlusskörper und dem Widerlager eingespannte, flüssigkeitsgefüllte Glasampulle bevorzugt. Durch entsprechende Wahl der Glasstärke und der Art der Flüssigkeit kann für einen solchen Berstkörper eine definierte Auslösetemperatur in einem vergleichsweise engen Fenster vorgegeben werden, so dass Sicherheitsventile mit den unterschiedlichsten Auslösetemperaturen durch Wahl einer konkreten Glasampulle bzw. einer entsprechenden Flüssigkeitsfüllung realisiert werden können.

Weitere Vorteile und Merkmale des erfindungsgemäßen Sicherheitsventils ergeben sich aus der nachfolgenden Beschreibung der in den beigefügten Figuren dargestellten Ausführungsbeispiele. Dabei zeigen:
- Fig. 1: eine Ansicht eines erfindungsgemäßen Sicherheitsventils;
- Fig. 2a: eine entlang der Linie A - A in Fig. 1 genommene Schnittansicht des Sicherheitsventils in einer ersten Variante in vergrößerter Darstellung;
- Fig. 2b: einen Ausschnitt entsprechend dem in Fig. 2a mit B bezeichneten Bereich in vergrößerter Darstellung;
- Fig. 3a: eine entlang der Linie A - A in Fig. 1 genommene Schnittdarstellung einer zweiten Ausführungsvariante eines erfindungsgemäßen Sicherheitsventils; und
- Fig. 3b: in vergrößerter Darstellung den in Fig. 3a mit B bezeichneten Bereich des Sicherheitsventils gemäß dieser Ausführungsform.

Die Figuren sind schematisch und nicht maßstabsgerecht. In den Figuren sind gleiche bzw. gleichartige Elemente mit gleichen bzw. gleichartig gebildeten Bezugszeichen versehen.

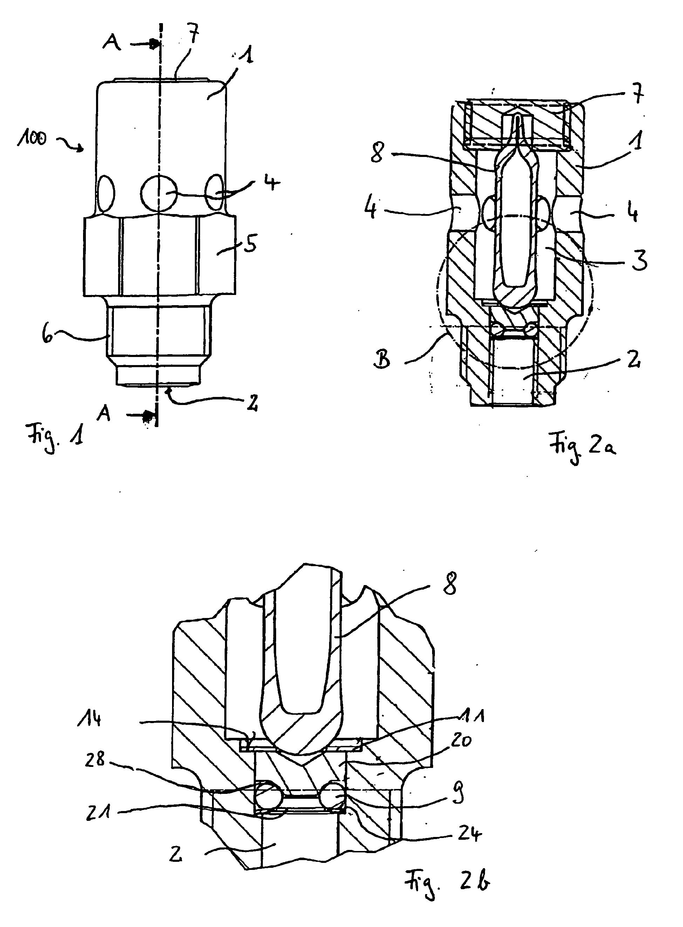

In Fig. 1 ist in einer möglichen Ausgestaltung ein erfindungsgemäßes Sicherheitsventil 100 gezeigt. Das erfindungsgemäße Ventil 100 ist in einem Gehäuse 1 gebildet. Im Inneren des Gehäuses weist das Sicherheitsventil 100 in dem in Fig. 1 unten dargestellten Bereich einen Überströmkanal 2 auf, welcher mit einem entsprechenden Stichkanal eines Gasdruckbehälters verbunden werden kann. Hierzu ist das Gehäuse 1 im Bereich des Überströmkanals mit einem Außengewinde 6 versehen, mit welchem es in ein entsprechendes Innengewinde eines Anschlusses eines Gasdruckbehälters bzw. Gasdruckventils eingeschraubt werden kann. Zum Einschrauben ist an dem Gehäuse 1 des Sicherheitsventils 100 ein Sechskant 5 vorgesehen, an welchem ein handelsüblicher Schraubenschlüssel angreifen kann. An seinem dem Außengewinde 6 gegenüberliegenden Ende ist das Gehäuse 1 mit einem eingeschraubten Widerlager 7 verschlossen. Das Gehäuse 1 weist in einem mittleren Abschnitt Abströmöffnungen 4 in Form von radial in das Gehäuse geführten Bohrungen auf.

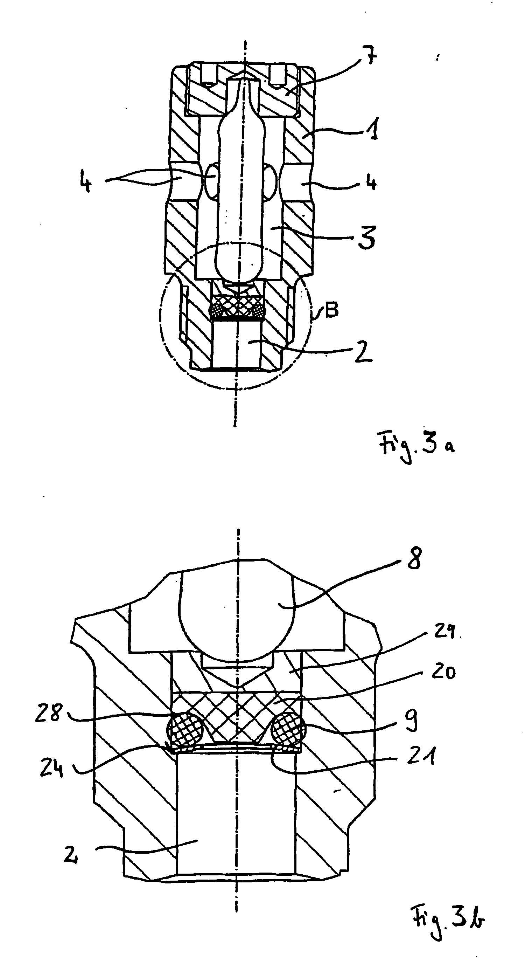

In den Figuren 2a und 2b, 3a und 3b sind nun zwei unterschiedliche mögliche Ausführungsvarianten eines erfindungsgemäßen Sicherheitsventils in Schnittdarstellungen entsprechend der Schnittlinie A - A in Fig. 1 gezeigt. Die gezeigten Ausführungsvarianten unterscheiden sich lediglich im inneren Aufbau des Sicherheitsventils 100, jedoch nicht von außen, so dass die Darstellung in Fig. 1 für alle zwei Varianten gleichermaßen gültig ist.

Zunächst wird die in den Figuren 2a und 2b gezeigte Variante unter Bezugnahme auf diese Figuren beschrieben. In den Figuren ist noch einmal der Überströmkanal 2 gut zu erkennen, wie er im Inneren des Gehäuses 1 des Sicherheitsventils 100 gebildet ist. In dem Überströmkanal 2 ist ein Verschlusskörper 20 angeordnet. Der Verschlusskörper 20 ist in Querschnitt keilförmig, in diesem Beispiel V-förmig und um eine Längsachse rotationssymmetrisch. Der Verschlusskörper 20 stößt einerseits gegen eine Tellerfeder 11, welche auf einem Absatz 14 in dem Überströmkanal 2 gelagert ist, an.

Auf seiner der Tellerfeder 11 abgewandten Seite weist der Verschlusskörper 20 eine konkav geformte Dichtfläche 28 auf, die in ihrem weitesten Durchmesser einen größeren Durchmesser aufweist als ein O-Ring 9. Der kleinste Durchmesser der Dichtfläche ist geringer als der Durchmesser des O-Rings 9, so dass der Verschlusskörper mit seiner Dichtfläche 28 keilartig in den O-Ring 9 hinein reicht. Die konkav geformte Dichtfläche 28 ist in ihrer Krümmung zumindest in Bereichen der Krümmung der Dichtflächen des O-Rings 9 angepasst, so dass sich zwischen der Dichtfläche 28 des Verschlusskörpers und dem O-Ring 9 eine optimale Dichtung erzielen lässt. Der O-Ring 9 liegt auf einer zweiten Tellerfeder 21 auf, welche wiederum auf einem Absatz 24 in dem Überströmkanal 2 gelagert ist.

Auf der dem Verschlusskörper 20 gegenüberliegenden Seite der Tellerfeder 11 liegt an letzterer die Unterseite einer flüssigkeitsbefüllten Glasampulle 8 an. Die flüssigkeitsgefüllte Glasampulle 8 ist mit ihrem anderen Ende in einer dem Verschlusskörper 20 axial gegenüberliegenden Sacklochbohrung in dem Widerlager 7 gelagert.

Die Darstellung in Fig. 2a bzw. 2b zeigt die Bereitschaftsposition des Verschlusskörpers 20, in welcher er in Zusammenwirkung mit dem O-Ring 9 den Überströmkanal 2 gegenüber einem Auslasskanal 3, welcher in die Ausströmöffnungen 4 mündet, sicher abdichtet. Die Form des in diesem Ausführungsbeispiel gezeigten Verschlusskörpers 20 bewirkt eine besonders gute Abdichtung des Überströmkanals 2 in der Bereitschaftsposition des Verschlusskörpers 20.

Die zwischen dem Verschlusskörper 20 und der Glasampulle 8 auf dem Absatz 14 in dem Überströmkanal 2 angeordnete Tellerfeder 11 übt auf die Glasampulle 8 in axialer Richtung eine auf das Widerlager 7 hingerichtete Federkraft auf.

Die Tellerfeder 11 kann insbesondere durch Verformung eine durch unterschiedliche thermische Ausdehnung der Metallteile Gehäuse 1, Verschlusskörper 20, Widerlager 7 und der Glasampulle 8 auftretende Spannungskraft aufnehmen und verhindert so ein aufgrund derartiger unterschiedlicher thermischer Ausdehnungen auftretendes vorzeitiges Bersten der Glasampulle 8 und damit ein verfrühtes Auslösen des Sicherheitsventils 100.

Durch die Anordnung der Tellerfeder 11 auf der dem Widerlager 7 gegenüberliegenden Seite müssen keine aus dem Gasdruck im Behälter resultierenden Kräfte von der Glasampulle 8 aufgenommen werden. Zusätzlich können durch unterschiedliche thermische Ausdehnungen erzeugte Spannungen von der Tellerfeder 21 aufgenommen werden, so dass sich eine weiter verbesserte Kompensation derartiger Kräfte bzw. Spannungen ergibt und somit noch sicherer gewährleistet ist, dass das Sicherheitsventil 100 nicht aufgrund durch unterschiedliche thermische Ausdehnungskoeffizienten des Glasmaterials der Glasampulle 8 sowie des Materials des Gehäuses 1 des Widerlagers 7 bzw. des Verschlusskörpers 20 auftretender, mechanischer Spannungen auslöst.

Beim Zusammenbau dieser Variante des erfindungsgemäßen Sicherheitsventils 100 wird die Glasampulle 8 zwischen der Tellerfeder 11 und dem Widerlager 7 mit einer definierten Kraft eingespannt, indem das Widerlager 7 bei eingesetzter Glasampulle 8 mit einem vorgegebenen Drehmoment in das Gehäuse 1 des Sicherheitsventils 100 eingeschraubt wird.

In den Figuren 3a und 3b ist eine geschnittene Ansicht eines zweiten Ausführungsbeispiels für ein erfindungsgemäßes Sicherheitsventil 100 dargestellt, welches in seiner Außenansicht wiederum in Fig. 1 wiedergegeben ist.

Dieses Ausführungsbeispiel entspricht in wesentlichen Konstruktionsdetails dem in den Figuren 2a und 2b gezeigten Ausführungsbeispiel, so dass hinsichtlich der Beschreibung dieses Ausführungsbeispiels auf die Erläuterungen zu den Fig. 2a und 2b verwiesen werden kann.

Im Unterschied zu dem zuvor gezeigten Ausführungsbeispiel ist in der hier gezeigten Variante lediglich eine Tellerfeder 21 vorgesehen, welche auf der dem Überströmkanal 2 zugewandten Seite des Verschlusskörpers 20 angeordnet ist. Eine wie in dem Ausführungsbeispiel gemäß den Figuren 2a und 2b vorgesehene, auf der der Glasampulle 8 zugewandten Seite des Verschlusskörpers 20 angeordnete Tellerfeder 14 entfällt gemäß diesem Ausführungsbeispiel.

Eine weitere Besonderheit des in den Figuren 2a und 2b gezeigten Ausführungsbeispiels ist, dass zusätzlich zu dem Verschlusskörper 20 zwischen diesem und der Glasampulle 8 ein Zwischenkörper 29 angeordnet ist. Selbstverständlich kann auch das in den Figuren 2a und 2b gezeigte Ausführungsbeispiel dahingehend abgewandelt werden, als dass der Zwischenkörper 29 fortfällt bzw. Teil des Verschlusskörpers 20 wird.

Aus den gezeigten Ausführungsbeispielen heraus wird deutlich, dass das Federelement (in den Ausführungsbeispielen als mindestens eine Tellerfeder) sowohl auf der dem Berstkörper zugewandten Seite des Verschlusskörpers als auch auf der dem Überströmkanal zugewandten Seite des Verschlusskörpers als auch zugleich auf beiden Seiten angeordnet werden kann.

In der in Figuren 2a-2b gezeigten Ausführungsvariante bietet die unmittelbar an der dem Widerlager 7 gegenüberliegenden Seite der Glasampulle 8 anliegende Tellerfeder 11 einen weiteren Vorteil. Sie dient nämlich zusätzlich als weiteres "Dichtelement", die ein Verschmutzen des jenseits derselben liegenden Überströmkanals 2 mit durch die Abströmöffnungen 4 eindringenden Partikeln, Fremdstoffen, Gasen oder dergleichen verhindert. Diese "Abdichtung" verhindert zudem eine Korrosion in dem jenseitigen Bereich auf der der Glasampulle 8 gegenüberliegenden Seite der Tellerfeder 11), indem sie auch korrosive Medien von einem Eindringen in diesen Bereich abhält.

Beide gezeigten Ausführungsvarianten des Sicherheitsventils 100 lösen bei einer vorbestimmten Temperatur (bei der eine Ausdehnung der Flüssigkeit in der Glasampulle 8 letztere zum Bersten bringt) aus. Bei der Auslösetemperatur birst die Glasampulle 8, so dass der Verschlusskörper 20 durch den Druck des in dem Überströmkanal 2 anliegenden Druckgases in Richtung des Auslasskanals 3 verschoben werden und somit eine Verbindung zwischen dem Überströmkanal 2, dem Auslasskanal 3 bzw. den Abströmöffnungen 4 geschaffen wird.

In den Ausführungsbeispielen ist die thermische Auslöseeinheit durch das Widerlager 7, die Glasampulle 8, den O-Ring 9, den Verschlusskörper 10 sowie die Tellerfeder(n) 11 bzw. 21, im Falle des zuletzt gezeigten Ausführungsbeispieles zusätzlich durch den Zwischenkörper 29 gebildet.

Aus der vorangehenden Beschreibung der Ausführungsbeispiele ist noch einmal klar deutlich geworden, welche Vorteile das erfindungsgemäße Einfügen eines Federelementes, insbesondere einer Tellerfeder in ein Sicherheitsventil 100 hat. Zudem werden die Vorteile der erfindungsgemäßen Form des Verschlusskörpers deutlich.

### Bezugszeichenliste

- 1: Gehäuse
- 2: Überströmkanal
- 3: Auslasskanal
- 4: Abströmöffnungen
- 5: Sechskant
- 6: Außengewinde
- 7: Widerlager
- 8: Glasampulle
- 9: O-Ring
- 11: Federelement
- 14: Absatz
- 20: Verschlusskörper
- 21: Tellerfeder
- 24: Absatz
- 28: Dichtfläche
- 29: Zwischenkörper
- 100: Sicherheitsventil

## Patentansprüche

1. Sicherheitsventil für einen Druckgasbehälter mit einem mit dem Druckgasbehälter verbundenen Überströmkanal (2) sowie einem Auslasskanal (3) und mit einer thermischen Auslöseeinheit, welche einen aus einer Bereitschaftsposition, in welcher er in Zusammenwirken mit einem Dichtelement (9) den Überströmkanal (2) gegenüber dem Auslasskanal (3) dicht verschlossen hält, in eine Freigabeposition, in welcher der Überströmkanal (2) mit dem Auslasskanal (3) verbunden ist, verlagerbaren Verschlusskörper (20) und einen Berstkörper (8), welcher zwischen einem Widerlager (7) und dem Verschlusskörper (20) angeordnet ist, um letzteren in der Bereitschaftsposition zu halten, aufweist, wobei die thermische Auslöseeinheit ein Federelement (11; 21) enthält, welches auf den Berstkörper (8) eine in Richtung des Widerlagers (7) gerichtete Federkraft ausübt, **dadurch gekennzeichnet, dass** der Verschlusskörper (20) ein im Querschnitt im wesentlichen keilförmiges, um eine Mittelachse rotationssymmetrisches Element ist, welches mit seiner keilförmig ausgebildeten Dichtfläche (28), die in einem weitesten Durchmesser breiter ist als ein Innendurchmesser eines O-Ringes als Dichtelement (9), in den Innendurchmesser des O-Ringes eingreift und diesen wenigstens radial gegen eine Wand des Überströmkanals (2) presst.

2. Sicherheitsventil nach Anspruch 1, **dadurch gekennzeichnet, dass** die Dichtfläche (28) konkav gewölbt ist.

3. Sicherheitsventil nach Anspruch 2, **dadurch gekennzeichnet, dass** eine Krümmung der konkav gewölbten Dichtfläche (28) in wenigstens einem Abschnitt derselben in ihrer Krümmung der Krümmung einer Abdichtfläche des O-Rings entspricht.

4. Sicherheitsventil nach einem der vorhergehenden, **dadurch gekennzeichnet, dass** in dem Überströmkanal (2) ein erster Absatz (24) vorhanden ist, auf dem eine erste Tellerfeder (21) aufliegt, wobei der O-Ring auf dieser ersten Tellerfeder (21) ruht und sich an dieser sowie an der Wand des Überströmkanals (2) dichtend abstützt, wobei der Verschlusskörper (20) auf der der ersten Tellerfeder (21) gegenüberliegenden Seite an dem O-Ring anliegt und wobei auf der dem O-Ring gegenüberliegenden Seite des Verschlusskörpers (20) eine zweite Tellerfeder (11) angeordnet ist, welche auf einem zweiten in dem Überströmkanal (2) gebildeten Absatz (14) aufliegt und auf deren dem Verschlusskörper (20) gegenüberliegenden Seite sich das Berstelement (8) abstützt.

5. Sicherheitsventil nach einem der vorhergehenden Ansprüche, **dadurch gekennzeichnet, dass** das Federelement (11; 21) auf der dem Widerlager (7) gegenüberliegenden Seite des Berstkörpers (8) angeordnet ist.

6. Sicherheitsventil nach einem der vorhergehenden Ansprüche, **dadurch gekennzeichnet, dass** das Federelement (11; 21) eine auf einem Absatz (14; 24) in dem Überströmkanal (2) aufgelegte Tellerfeder ist.

7. Sicherheitsventil nach einem der vorhergehenden Ansprüche, **dadurch gekennzeichnet, dass** der Berstkörper (8) eine axial zwischen dem Verschlusskörper (20) und dem Widerlager (7) eingespannte, flüssigkeitsgefüllte Glasampulle ist.

## Claims

1. Safety valve for a pressure gas container with an overflow passage (2) connected to the latter, as well as an outlet passage (3) and having a thermal cutout unit, which has a closure member (20) displaceable from a standby position in which, in conjunction with a sealing element (9), it keeps the overflow passage (2) tightly sealed with respect to the outlet passage (3), into a release position in which the overflow passage (2) is connected to the outlet passage (3) and a bursting member (8), which is positioned between an abutment (7) and the closure member (20) in order to keep the latter in the standby position, the thermal cutout unit containing a spring element (11, 21) exerting on the bursting member (8) a spring tension directed towards the abutment (7), **characterized in that** the closure member (20) is a cross-sectionally substantially wedge-shaped element rotationally symmetrical about a central axis, which with its wedge-shaped sealing surface (28), which in its widest diameter is wider than an internal diameter of an O-ring as the sealing element (9), engages in the internal diameter of the O-ring and presses the latter at least radially against a wall of the overflow passage (2).

2. Safety valve according to claim 1, **characterized in that** the sealing surface (28) is concavely curved.

3. Safety valve according to claim 2, **characterized in that** the curvature of the concavely curved sealing surface (28) in at least one portion thereof corresponds to the curvature of a sealing surface of the O-ring.

4. Safety valve according to one of the preceding claims, **characterized in that** the overflow passage is provided a first step (24) on which rests a first cup spring (21), the O-ring resting on said first cup spring (21) and is sealingly supported on the latter and on the wall of the overflow passage (2), the closure member (20) engaging on the O-ring on the side opposite to the first cup spring (21) and on the side of the closure member (20) opposite to the O-ring is provided a second cup spring (11), which rests on a second step (14) formed in the overflow passage (2) and on its side opposite to the closure member (20 is supported the bursting element (8).

5. Safety valve according to one of the preceding claims, **characterized in that** the spring element (11, 21) is located on the side of the bursting member (8) opposite to the abutment (7).

6. Safety valve according to one of the preceding claims, **characterized in that** the spring element (11, 21) is a cup spring placed on a step (14, 24) in overflow passage (2).

7. Safety valve according to one of the preceding claims, **characterized in that** the bursting member (8) is a liquid-filled glass ampoule fixed axially between the closure member (20) and the abutment (7).

## Revendications

1. Soupape de sûreté pour un réservoir de gaz comprimé, comportant un canal de trop-plein (2) relié au réservoir de gaz comprimé et un canal d'échappement t (3), ainsi qu'une unité de déclenchement thermique, qui est dotée d'un corps de fermeture (20) pouvant être déplacé d'une position d'attente, dans laquelle il maintient le canal de trop-plein (2) hermétiquement fermé par rapport au canal d'échappement (3) avec l'action conjointe d'un élément d'étanchéité (9), dans une position de libération, dans laquelle le canal de trop-plein (2) est relié au canal d'échappement (3), et d'un corps d'éclatement (8) qui est disposé entre une butée (7) et le corps de fermeture (20), afin de maintenir ce dernier dans la position d'attente, l'unité de déclenchement thermique comprenant un élément à ressort (11 ; 21), qui exerce sur le corps d'éclatement (8) une force de ressort orientée en direction de la butée (7), **caractérisée en ce que** le corps de fermeture (20) est un élément à symétrie de révolution autour d'un axe central, à section transversale sensiblement cunéiforme, qui par sa surface d'étanchéité cunéiforme (28), dont le diamètre le plus important est plus large qu'un diamètre intérieur d'un joint torique faisant office d'élément d'étanchéité (9), s'engage dans le diamètre intérieur du joint torique et applique celui-ci, au moins radialement, contre une paroi du canal de trop-plein (2).

2. Soupape de sûreté selon la revendication 1, **caractérisée en ce que** la surface d'étanchéité (28) est cintrée de façon concave.

3. Soupape de sûreté selon la revendication 2, **caractérisée en ce qu'**une courbure de la surface d'étanchéité (28) cintrée de façon concave correspond dans au moins une section de celle-ci, dans sa courbure, à la courbure d'une surface d'étanchéité du joint torique.

4. Soupape de sûreté selon l'une des revendications précédentes, **caractérisée en ce qu'**un premier épaulement (24) est prévu dans le canal de trop-plein (2), sur lequel prend appui un premier ressort à disque (21), le joint torique s'appliquant sur ce premier ressort à disque (21), et prenant appui de façon étanche sur celui-ci ainsi que sur la paroi du canal de trop-plein (2), le corps de fermeture (20) s'appliquant contre le joint torique sur la face opposée au premier ressort à disque (21), et un deuxième ressort à disque (11) étant disposé sur la face du corps de fermeture (20) opposée au joint torique, lequel prend appui sur un deuxième épaulement (14) formé dans le canal de trop-plein (2), et sur la face opposée au corps de fermeture (20) duquel prend appui l'élément d'éclatement (8).

5. Soupape de sûreté selon l'une des revendications précédentes, **caractérisée en ce que** l'élément à ressort (11 ; 21) est disposé sur la face du corps d'éclatement (8) opposée à la butée (7).

6. Soupape de sûreté selon l'une des revendications précédentes, **caractérisée en ce que** l'élément à ressort (11 ; 21) est un ressort à disque qui prend appui sur un épaulement (14 ; 24) prévu dans le canal de trop-plein (2).

7. Soupape de sûreté selon l'une des revendications précédentes, **caractérisée en ce que** le corps d'éclatement (8) est une ampoule en verre remplie de liquide enserrée axialement entre le corps de fermeture (20) et la butée (7).
